Europäisches Patentamt

European Patent Office

Office européen des brevets

(19)

(11) Numéro de publication : **0 429 336 A1**

## (12) DEMANDE DE BREVET EUROPEEN

(21) Numéro de dépôt : **90403202.6**

(22) Date de dépôt : **12.11.90**

(51) Int. Cl.⁵ : **B65D 51/00**

(30) Priorité : **22.11.89 FR 8915312**

(43) Date de publication de la demande :
**29.05.91 Bulletin 91/22**

(84) Etats contractants désignés :
**DE ES GB IT**

(71) Demandeur : **VACHETTE**
**92, Boulevard Richard Lenoir**
**F-75011 Paris (FR)**

(72) Inventeur : **Mangin, Robert**
**52, rue de Thurey**
**F-10600 Saint Benoit/Seine (FR)**
Inventeur : **Mutter, Willy**
**8, rue du Cottage**
**F-10400 St Parres aux Tertres (FR)**

(74) Mandataire : **Michardière, Bernard et al**
**C/O CABINET PEUSCET 68, rue d'Hauteville**
**F-75010 Paris (FR)**

(54) **Bouchon de réservoir, en particulier bouchon de réservoir à carburant pour véhicule automobile.**

(57)     Le bouchon de réservoir comprend un corps (2) muni d'un logement (3) propre à recevoir un barillet (7) lié en translation au corps, mais pouvant tourner sous l'action d'une clé appropriée. Des moyens de verrouillage (V) du bouchon sur l'extrémité d'une pipe (12) de réservoir, commandés par la rotation du barillet (7), comprennent uniquement une pièce (13) montée rotative sur le corps (2) et qui peut être mise en place, sur ce corps, par un mouvement de translation pour une position relative angulaire d'assemblage/séparation de la pièce (13) par rapport au corps (2). Ladite pièce (13) comporte des moyens de retenue (R,16) sur la pipe (12). La liaison en translation de la pièce (13) et du corps (2) est obtenue par une rotation, après mise en place de la pièce (13), l'écartant de la position angulaire d'assemblage/séparation. Des moyens de positionnement angulaire sont prévus sur le barillet et le corps pour n'autoriser la rotation du barillet que dans une plage angulaire dont est exclue la susdite position d'assemblage/séparation.

FIG.1

EP 0 429 336 A1

# BOUCHON DE RESERVOIR, EN PARTICULIER BOUCHON DE RESERVOIR A CARBURANT POUR VEHICULE AUTOMOBILE

L'invention est relative à un bouchon de réservoir, en particulier un bouchon de réservoir à carburant pour véhicule automobile, du genre de ceux qui comprennent un corps muni d'un logement sensiblement cylindrique propre à constituer le stator d'un verrou et à recevoir, par translation axiale, un barillet constituant le rotor de ce verrou, ce barillet étant lié en translation au corps en fin d'introduction et pouvant tourner, relativement au corps, sous l'action d'une clé appropriée, et des moyens de verrouillage du bouchon sur l'extrémité d'une pipe de réservoir, ces moyens de verrouillage étant commandés par la rotation du barillet.

On connait de nombreux types de bouchons de réservoir, notamment des bouchons dans lesquels la rotation du barillet commande un organe excentré qui entraîne en translation radiale un pêne de verrouillage.

Les divers bouchons de réservoir proposés jusqu'à ce jour fonctionnent d'une manière satisfaisante, mais font intervenir un nombre de pièces relativement élevé. Il en résulte des complications au niveau des opérations de fabrication, d'assemblage, et un prix de revient relativement élevé.

L'invention a pour but, surtout, de fournir un bouchon de réservoir dont le nombre de pièces constituantes soit aussi réduit que possible tout en assurant les fonctions habituelles.

Selon l'invention, un bouchon de réservoir, en particulier un bouchon de réservoir à carburant pour véhicule automobile, du genre défini prédécemment, est caractérisé par le fait :

– que les moyens de verrouillage comprennent uniquement une pièce montée rotative sur le corps et qui peut être mise en place, sur ce corps, par un mouvement de translation parallèle à l'axe du logement pour une position relative angulaire d'assemblage/séparation de la pièce par rapport au corps, ladite pièce comportant des moyens de retenue sur la pipe de réservoir propres à être mis en position de travail par la rotation de la pièce,

– que la liaison en translation de la pièce et du corps est obtenue par une rotation, après mise en place de la pièce, l'écartant de la position angulaire d'assemblage/séparation,

– et que des moyens de positionnement angulaire sont prévus sur le barillet et le corps pour n'autoriser la rotation du barillet relativement au corps que dans une plage angulaire dont est exclue la susdite position d'assemblage/séparation de la pièce et du corps,

de sorte qu'après introduction du barillet dans le corps et liaison en translation du barillet et du corps, la pièce, liée en rotation au barillet, ne peut plus être séparée du corps.

Avantageusement, la pièce des moyens de verrouillage a la forme d'une cuvette.

De préférence, la liaison en translation entre la cuvette et le corps comprend, du côté de la cuvette, au moins un ergot en saillie radiale vers l'intérieur et, du côté du corps, une collerette en saillie radiale vers l'extérieur, cette collerette comportant au moins une échancrure permettant le passage de l'ergot lorsque la cuvette occupe, relativement au corps, la position d'assemblage/séparation, la liaison en translation étant assurée lorsque l'ergot a été engagé, par une rotation à partir de la position d'assemblage/séparation, derrière la collerette.

Généralement, la cuvette comporte deux ergots diamétralement opposés, tandis que la collerette du corps comporte deux échancrures diamétralement opposées.

Les moyens de retenue, prévus sur la cuvette, comprennent de préférence deux baïonnettes dirigées radialement vers l'extérieur et diamétralement opposées, ces deux baïonnettes ayant la même position angulaire que les ergots, lesdites baïonnettes étant propres à coopérer avec des rampes de la pipe du réservoir, après avoir été engagées en arrière de ces rampes par des ouvertures appropriées séparant les rampes.

Le corps comporte deux languettes, diamétralement opposées, situées radialement à l'extérieur de la collerette et faisant saillie parallèlement à la direction axiale du corps, ces languettes ayant une position angulaire décalée d'un certain angle par rapport aux échancrures de la collerette, lesdites languettes étant propres à s'engager dans les ouvertures séparant les rampes de la pipe du réservoir pour assurer le blocage en rotation du corps par rapport à cette pipe.

Des bossages peuvent être prévus sur un manchon du corps situé en arrière de la collerette et formant la limite intérieure de cette collerette, chaque bossage étant situé, angulairement, au niveau d'une échancrure de la collerette, et étant propre à coopérer avec le bord radial intérieur d'un ergot de la cuvette pour créer un point dur s'opposant à la séparation de la cuvette et du corps, alors que le barillet n'a pas été mis en place, sous l'action du seul poids des pièces.

Les moyens de positionnement angulaire prévus sur le barillet et le corps comprennent, sur le barillet, vers son extrémité éloignée de la cuvette, un organe de butée en saillie radiale et, du côté du corps, un évidement, pour recevoir cet organe de butée, qui a une étendue angulaire située dans une zone où les ergots de la cuvette ne peuvent venir en regard des échancrures de la collerette.

Le corps peut comporter une ceinture de diamètre plus important présentant une surface d'appui tournée vers la pipe du réservoir, et propre à s'appuyer contre un joint d'étanchéité entourant extérieurement l'entrée de la pipe.

La cuvette comporte un fond, tourné vers la pipe, ce fond étant muni d'un manchon central en saillie, dans lequel est prévu un logement, notamment de section sensiblement rectangulaire, propre à recevoir un prolongement de section correspondante du barillet pour la liaison en rotation du rotor et de la cuvette.

L'invention consiste, mises à part les dispositions exposées ci-dessus, en un certain nombre d'autres dispositions dont il sera plus explicitement question ci-après à propos d'un exemple de réalisation particulier décrit avec référence aux dessins ci-annexés, mais qui n'est nullement limitatif.

La figure 1, de ces dessins, est une coupe par un plan diamétral vertical d'un bouchon de réservoir, conforme à l'invention, et de l'extrémité d'une pipe de réservoir, destinée à être fermée par ce bouchon.

La figure 2 est une vue en perspective de la cuvette et d'une partie du corps du bouchon avant assemblage.

La figure 3 est une coupe, simplifiée, suivant la ligne III-III figure 1 de la cuvette et du corps en position d'assemblage.

La figure 4 montre, semblablement à la figure 3, la cuvette et le corps dans une position angulaire relative correspondant à l'ouverture de la pipe du réservoir.

La figure 5 montre, semblablement à la figure 3, la cuvette et le corps dans leur position angulaire relative correspondant à la fermeture de la pipe du réservoir.

La figure 6, enfin, est une section simplifiée suivant la ligne VI-VI figure 1.

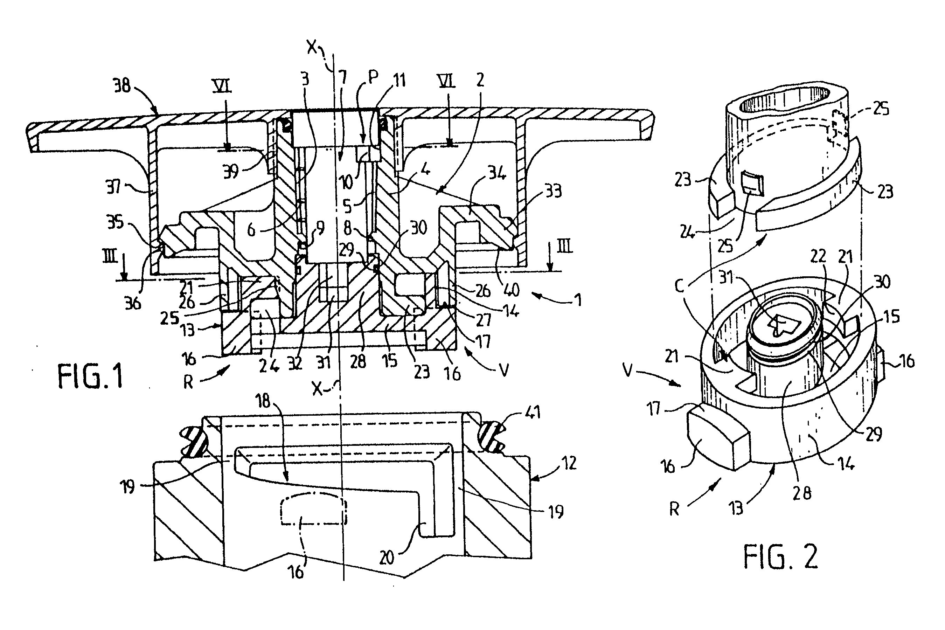

En se reportant aux dessins, notamment à la figure 1, on peut voir un bouchon 1 de réservoir à carburant pour véhicule automobile. Ce bouchon 1 comprend un corps 2 monobloc muni d'un logement sensiblement cylindrique 3 prévu à l'intérieur d'un manchon 4, faisant saillie d'un côté par rapport au plan moyen du corps 2 qui a une forme générale circulaire. Selon la position représentée sur la figure 1, le manchon 4 fait saillie vers le haut par rapport au plan moyen du corps 2.

Le logement 3 est agencé pour constituer le stator d'un verrou ; il comporte, notamment, deux rainures longitudinales diamétralement opposées telles que 5 propres à recevoir l'extrémité extérieure de paillettes 6 d'un barillet 7 constituant le rotor de ce verrou. Le barillet 7 peut être introduit dans le logement 3 par un mouvement de translation axiale, pour une orientation appropriée du barillet 7 relativement au corps 2.

Les rainures 5 sont limitées, vers l'intérieur, par un épaulement 8 dont la face tournée vers l'entrée du logement 3 est inclinée de manière à constituer une rampe. Le barillet 7 comporte, vers son extrémité intérieure, une paillette 9 qui fait saillie vers l'extérieur sous l'action de moyens élastiques, non visibles, et qui peut être repoussée vers l'intérieur. Cette paillette 9 ne peut être effacée par l'introduction d'une clé. Lors de la mise en place du barillet 7 dans le logement 3, la face inclinée de l'épaulement 8 repousse la paillette 9 vers l'intérieur et permet le franchissement de l'épaulement 8 ; dès que la paillette 9 a franchi cet épaulement, elle fait à nouveau saillie vers l'extérieur et emprisonne de manière indémontable le barillet 7 dans le logement 3.

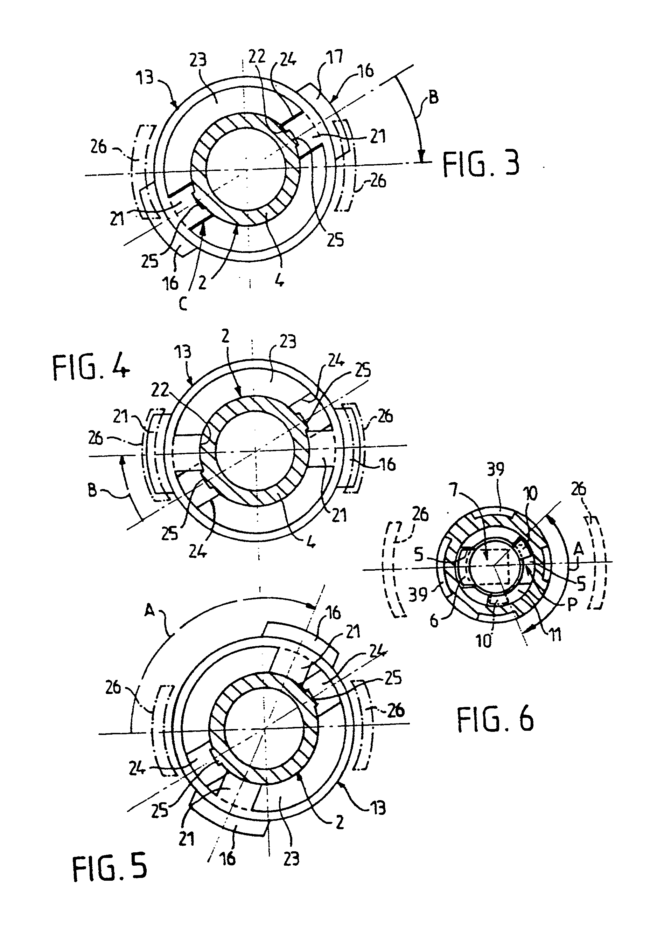

Des moyens de positionnement angulaire P, notamment visibles sur la figure 6, sont prévus sur le barillet 7 et le corps 2 pour limiter la rotation du barillet relativement au corps dans une plage angulaire A déterminée. Les moyens de positionnement P comprennent, au niveau du barillet, un organe de butée 10, en saillie radiale situé dans la partie avant du barillet et, du côté du corps 2, un évidement frontal 11 en arc de cercle, d'étendue angulaire A et dont la position sera précisée plus loin dans la description.

Lorsqu'une clé appropriée est introduite dans le barillet 7, les paillettes telles que 6 sont effacées des rainures 5 et le barillet 7 peut tourner, relativement au corps 2, dans la plage angulaire définie par la coopération de la butée 10 et du logement 11.

Le bouchon de réservoir 1 comprend des moyens de verrouillage V sur la pipe 12 du réservoir. Ces moyens de verrouillage V comprennent uniquement une cuvette 13 montée rotative sur le corps 2, du côté opposé à l'extrémité du manchon 4 par laquelle est introduit le barillet 7.

La cuvette 13 peut être mise en place sur le corps 2 par un mouvement de translation parallèle à l'axe X-X du logement 3, pour une position relative angulaire d'assemblage/séparation de la cuvette 13 par rapport au corps 2, position angulaire qui est représentée sur la figure 3.

La cuvette 13 comporte une paroi cylindrique extérieure 14, disposée coaxialement à l'axe X-X et un fond transversal 15 situé légèrement en retrait par rapport à la face de la paroi 14 la plus éloignée du logement 3.

La cuvette 13 comporte des moyens de retenue R sur la pipe 12. Ces moyens de retenue R sont constitués par deux baïonnettes 16 diamétralement opposées, prévues sur la paroi cylindrique 14. Ces baïonnettes 16 sont formées par des bossages sensiblement parallélépipédiques rectangles en saillie sur la paroi 14 ; la face arrière d'un bossage 16 est située sensiblement au niveau de la face arrière de la paroi 14, tandis que la face avant 17 du bossage est située sensiblement à mi-longueur de la paroi 14. La face avant 17 est légèrement convexe vers l'avant.

Sur la surface intérieure de la pipe 12 du réservoir, sont prévues en saillie vers l'intérieur deux rampes telles que 18 diamétralement opposées. Les rampes 18 sont séparées l'une de l'autre par des ouvertures 19, également diamétralement opposées, permettant d'engager les baïonnettes 16 en arrière des rampes 18. La rotation de la cuvette 13 relativement à la pipe 12 permet d'assurer le verrouillage en amenant la baïonnette 16 en appui contre une butée 20 terminant la rampe 18, qui forme un rebord interne.

Des moyens d'accrochage en translation C entre la cuvette et le corps 2 sont prévus. Ces moyens d'accrochage C comprennent, du côté de la cuvette 13, deux ergots 21, diamétralement opposés, faisant saillie radialement vers l'intérieur et prévus au niveau de la face transversale de la paroi 14 tournée vers le corps 2. La face radiale intérieure 22 des ergots 21 est constituée par une portion de surface cylindrique coaxiale à la paroi 14.

Du côté du corps 2, les moyens d'accrochage C comprennent une collerette 23 en saillie radiale vers l'extérieur. La collerette 23 est prévue à l'extrémité d'un prolongement du manchon 4 opposé à l'entrée du barillet 7. La collerette 23 comporte deux échancrures 24 diamétralement opposées dont la largeur est juste suffisante pour permettre le passage d'un ergot 21. Ainsi, lorsque la cuvette 13 est orientée, relativement au corps 2, pour occuper la position d'assemblage/séparation, les ergots 21 se trouvent en face des échancrures 24 et la cuvette 13 peut être enfilée sur le corps 2 par translation axiale. Une rotation ultérieure, après cette mise en place, fait passer les ergots 21 derrière la collerette 23, ce qui assure une liaison en translation entre la cuvette 13 et le corps 2. La cuvette 13 et le corps 2 sont agencés de telle sorte que cette liaison en translation, avec possibilité de rotation, s'effectue sans jeu axial sensible entre le corps 2 et la cuvette 13.

Un bossage 25 est prévu sur la surface extérieure du prolongement du manchon 4 juste en arrière des échancrures 24, au milieu de la plage angulaire de cette échancrure. Ces bossages 25 nécessitent d'exercer un effort dans le sens axial, puis un couple de rotation, sur la cuvette 13 pour l'introduire puis la faire tourner relativement au corps 2.

Lorsque les ergots 21 qui se sont légèrement déformés, sous l'action des bossages 25, reprennent leur position normale, le franchissement des bossages 25, par les ergots 21, ne sera possible qu'au prix d'un certain couple de rotation qui ne peut être produit que par un opérateur ; les poids des deux pièces, assemblées, sont insuffisants pour franchir ce point dur et placer les ergots 21 en face des échancrures 24. Ainsi, lorsque la cuvette 13 et le corps 2 ont été assemblés en translation, ces deux pièces ne peuvent pratiquement pas se séparer sous la simple action de leur poids, par exemple lorsque ces deux pièces pré-assemblées sont stockées, ou transportées dans des bacs en grande quantité.

Le corps 2 comporte, du côté tourné vers la cuvette 13, deux languettes 26 diamétralement opposées situées radialement à l'extérieur de la collerette

23 et faisant saillie, en direction de la cuvette 13, parallèlement à la direction axiale X-X. Ces languettes 26 sont formées par des portions de paroi cylindrique et leur surface extérieure admet sensiblement le même rayon que la surface extérieure des baïonnettes 16. Le bord frontal 27 des languettes 26, le plus proche des baïonnettes 16, se trouve légèrement en arrière de la face convexe 17 de ces baïonnettes lorsque la cuvette 13 a été mise en place sur le corps 2. Ainsi, les baïonnettes 16 peuvent passer devant les languettes 26 sans être gênées par celles-ci lors de la rotation.

La cuvette 13 comporte, dans sa partie centrale, un manchon 28 solidaire du fond 15 et s'étendant axialement en direction du corps 2. Le diamètre extérieur de ce manchon 28 est légèrement inférieur au diamètre intérieur du prolongement du manchon 4 de manière à pouvoir s'engager à l'intérieur de ce prolongement. Le manchon 28 comporte une gorge annulaire extérieure 29 dans laquelle est placé un joint d'étanchéité 30 entre ce manchon 28 et le corps 2. L'extrémité du manchon 28 comporte un logement 31 sensiblement parallélépipédique rectangle propre à recevoir une extrémité 32, de forme conjuguée, du barillet 7. L'engagement de l'extrémité 32 dans le logement 31 s'effectue par translation axiale ; lorsque cet engagement est réalisé, la cuvette 13 est liée en rotation au barillet 7.

Le corps 2 comporte une couronne extérieure 33 reliée par un voile nervuré 34 au manchon 4. Le bord de la couronne 33 comporte une gorge périphérique 35 dans laquelle est propre à s'encliqueter un bourrelet 36 prévu en saillie radialement vers l'intérieur sur la paroi interne d'un fourreau 37 solidaire d'un couvercle 38.

Le manchon 4 comporte, en outre, à son extrémité tournée vers le couvercle 38, sur sa paroi extérieure, quatre rainures 39 régulièrement réparties à 90°, propres à coopérer avec des nervures correspondantes prévues dans le couvercle 38 pour assurer la liaison en rotation du couvercle 38 et du corps 2.

La couronne 33 présente, du côté tourné vers la pipe 12, une face tronconique 40 propre à venir s'appliquer contre un joint d'étanchéité 41 du type joint torique à fente, prévu autour de l'extrémité de la pipe 12.

Comme visible sur les figures 3 à 5, les languettes 26 sont décalées angulairement par rapport aux échancrures 24, d'un angle B, par exemple de 30° environ.

Les grands côtés du logement 31 (figure 2) prévu dans le manchon 28 forment un angle différent de 90° avec le diamètre joignant le milieu des ergots 21.

L'évidement frontal 11 (voir figure 6) est positionné de manière telle que l'engagement de la partie 32 du barillet, dans le logement 31 de la cuvette, ne peut avoir lieu que lorsque la cuvette 13 occupe, relativement au corps 2, une position différente de la position d'assemblage/séparation. En outre, l'étendue de la plage angulaire A, correspondant à la rotation possible du barillet 7 relativement au corps 2, et donc à la rotation possible de la cuvette 13 par rapport au corps 2, est comprise entre deux limites dont est exclue la position d'assemblage/séparation de la cuvette 13 et du corps 2. Une première limite de cette plage angulaire A correspond à la position relative de la figure 4 du corps 2 et de la cuvette 13, position qui correspond à l'ouverture du bouchon de réservoir et à sa séparation possible de la pipe 12. Les languettes 16 sont alignées sur les ergots 21 qui peuvent alors passer à travers les ouvertures 19 entre les rampes 18 de la pipe.

L'autre limite de la plage A correspond à la position relative de la figure 5 entre corps 2 et cuvette 13, qui correspond à l'état fermé du bouchon de réservoir sur la pipe 12. Les ergots 21 sont écartés des languettes 16 et des ouvertures 19.

Le passage de la configuration de la figure 4 à celle de la figure 5 est obtenu par une rotation d'amplitude A de la cuvette 13 relativement au corps 2, sans que les ergots 21 passent devant les échancrures 24, et donc sans possibilité de séparation du corps 2 et de la cuvette 13.

Ceci étant, l'assemblage et l'utilisation d'un bouchon de réservoir conforme à l'invention sont les suivants.

On effectue, tout d'abord, l'assemblage de la cuvette 13 et du corps 2.

Pour cela, on oriente la cuvette 13 relativement au corps 2 dans la position d'assemblage, de sorte que les ergots 21 se trouvent en face des échancrures 24. Par translation axiale, on fait franchir aux ergots 21 les échancrures 24 en surmontant le point dur créé par les bossages 25. Cette position correspond à celle de la figure 3.

Il est à noter que les languettes 26 sont décalées de l'angle B par rapport à la position d'introduction des ergots 21.

On fait ensuite tourner la cuvette 13 par rapport au corps 2 de manière à aligner les baïonnettes 16 et les languettes 26, pour aboutir à la position de la figure 4. La liaison en translation entre le corps 2 et la cuvette 13 est assurée par les ergots 21 qui se trouvent derrière la collerette 23.

Dans la position de la figure 4, le logement 31 occupe la position appropriée pour recevoir le prolongement 32 du barillet 7 dont la position angulaire, pour son introduction dans le manchon 4, est déterminée par les rainures 5. On engage alors le barillet 7 dans le logement 3 de manière à introduire le prolongement 32 dans le logement 31. En fin d'introduction du barillet 7, la paillette 9 établit une liaison en translation du barillet et du corps.

Lorsque la mise en place du barillet 7 a été effectuée, il n'est plus possible de démonter la cuvette 13 du corps 2 puisque la rotation autorisée par le barillet 7 limite les déplacements angulairess de la cuvette 13 et donc des ergots 21 dans une plage où il n'y aura jamais alignement des ergots 21 et des échancrures 24.

La rotation du barillet 7 de la position de la figure 4 (bouchon de réservoir ouvert) à la position de la figure 5 (bouchon de réservoir fermé) est obtenue à l'aide d'une clé appropriée (non représentée) permettant l'effacement des paillettes 6 et la rotation du barillet 7 relativement au manchon 4.

On voit que selon l'invention l'entraînement de la cuvette mobile 13 se fait directement par la rotation du barillet 7.

Le bouchon conforme à l'invention ne comporte que trois pièces principales en matière plastique, à savoir le corps 2, la cuvette 13 et le couvercle 38. L'assemblage de ces pièces est d'une grande simplicité, et s'effectue sans apport mécanique extérieur et sans déformation permanente de l'une des trois pièces pour la retenue de l'ensemble.

Le corps 2 et la cuvette 13 peuvent être préassemblées en attendant le montage d'un barillet 7.

**Revendications**

1. Bouchon de réservoir, en particulier bouchon de réservoir à carburant pour véhicule automobile, comprenant un corps muni d'un logement sensiblement cylindrique propre à constituer le stator d'un verrou et à recevoir, par translation axiale, un barillet constituant le rotor de ce verrou, ce barillet étant lié en translation au corps en fin d'introduction et pouvant tourner, relativement au corps, sous l'action d'une clé appropriée, et des moyens de verrouillage du bouchon sur l'extrémité d'une pipe de réservoir, ces moyens de verrouillage étant commandés par la rotation du barillet, caractérisé par le fait :

   – que les moyens de verrouillage (V) comprennent uniquement une pièce (13) montée rotative sur le corps (2) et qui peut être mise en place, sur ce corps (2), par un mouvement de translation parallèle à l'axe du logement (3) pour une position relative angulaire d'assemblage/séparation de la pièce (13) par rapport au corps (2), ladite pièce comportant des moyens de retenue (R) sur la pipe (12) de réservoir propres à être mis en position de travail par la rotation de la pièce (13),

   – que la liaison en translation de la pièce (13) et du corps (2) est obtenue par une rotation, après mise en place de la pièce (13), l'écartant de la position angulaire d'assemblage/séparation,

   – et que des moyens de positionnement angulaire (P) sont prévus sur le barillet (7) et le corps (2) pour n'autoriser la rotation du barillet (7) relativement au corps (2) que dans une plage angulaire dont est exclue la susdite position d'assemblage/séparation de la cuvette (13) et du corps (2),

de sorte qu'après introduction du barillet (7) dans le corps (2) et liaison en translation du barillet (7) et du corps (2), la pièce (13), liée en rotation au barillet (7), ne peut plus être séparée du corps (2).

2. Bouchon selon la revendication 1, caractérisé par le fait que la pièce des moyens de verrouillage a la forme d'une cuvette (13).

3. Bouchon selon la revendication 2, caractérisé par le fait que la liaison en translation entre la cuvette (13) et le corps (2) comprend, du côté de la cuvette, au moins un ergot (21) en saillie radiale vers l'intérieur et, du côté du corps (2), une collerette (23) en saillie radiale vers l'extérieur, cette collerette (23) comportant au moins une échancrure (24) permettant le passage de l'ergot (21) lorsque la cuvette (13) occupe, relativement au corps (2), la position d'assemblage/séparation, la liaison en translation étant assurée lorsque l'ergot (21) a été engagé, par une rotation à partir de la position d'assemblage/séparation, derrière la collerette (23).

4. Bouchon selon la revendication 2 ou 3, caractérisé par le fait que la cuvette (13) comporte deux ergots (21), diamétralement opposés, tandis que la collerette (23) du corps (2) comporte deux échancrures (24) diamétralement opposées.

5. Bouchon selon l'une quelconque des revendications 2 à 4, caractérisé par le fait que les moyens de retenue (R), prévus sur la cuvette (13), comprennent deux baïonnettes (16) dirigées radialement vers l'extérieur et diamétralement opposées, ces deux baïonnettes (16) ayant la même position angulaire que les ergots (21), lesdites baïonnettes étant propres à coopérer avec des rampes (18) de la pipe (12) du réservoir, après avoir été engagées en arrière de ces rampes (18) par des ouvertures appropriées (19), séparant les rampes (18).

6. Bouchon selon l'une quelconque des revendications 3 à 5, caractérisé par le fait que le corps (2) comporte deux languettes (26), diamétralement opposées, situées radialement à l'extérieur de la collerette (23) et faisant saillie parallèlement à la direction axiale du corps (2), ces languettes (26) ayant une position angulaire décalée d'un certain angle (B) par rapport aux échancrures (24) de la collerette (23), lesdites languettes (26) étant propres à s'engager dans les ouvertures (19) séparant les rampes (18) de la pipe (12) du réservoir pour assurer le blocage en rotation du corps (2) par rapport à cette pipe (12).

7. Bouchon selon la revendication 6, caractérisé par le fait que l'angle (B) de décalage entre les languettes (26) et les échancrures (24) est d'environ 30°.

8. Bouchon selon l'une quelconque des revendications 3 à 7, caractérisé par le fait que des bossages (25) sont prévus sur un manchon du corps (2) situé en arrière de la collerette (23) et formant la limite intérieure de cette collerette (23), chaque bossage (25) étant situé, angulairement, au niveau d'une échancrure (24) de la collerette, et étant propre à coopérer avec le bord radial intérieur (22) d'un ergot (21) de la cuvette (13) pour créer un point dur s'opposant à la séparation de la cuvette (13) et du corps (2), alors que le barillet (7) n'a pas été mis en place, sous l'action du seul poids des pièces.

9. Bouchon selon l'une quelconque des revendications précédentes, caractérisé par le fait que les moyens de positionnement (P) prévus sur le barillet (7) et le corps (2) comprennent, sur le barillet, vers son extrémité éloignée de la cuvette (13), un organe de butée (10) en saillie radiale et, du côté du corps (2), un évidement (11) pour recevoir cet organe de butée (10), qui a une étendue angulaire située dans une zone où les ergots (21) de la cuvette (13) ne peuvent venir en regard des échancrures (24) de la collerette (23).

10. Bouchon selon l'une quelconque des revendications précédentes, caractérisé par le fait que le corps (2) comporte une ceinture (33) de diamètre plus important présentant une surface d'appui (40) tournée vers la pipe (12) du réservoir, et propre à s'appuyer contre un joint d'étanchéité (41) entourant extérieurement l'entrée de la pipe (12).

11. Bouchon selon l'une quelconque des revendications précédentes, caractérisé par le fait que la cuvette (13) comporte un fond (15), tourné vers la pipe (12), ce fond (15) étant muni d'un manchon central (28) en saillie, dans lequel est prévu un logement (31), notamment de section sensiblement rectangulaire, propre à recevoir un prolongement (32) de section correspondante du barillet (7) pour la liaison en rotation du rotor et de la cuvette (13).

FIG. 2

FIG.1

FIG. 3

FIG. 4

FIG. 6

FIG. 5

Office européen
des brevets

# RAPPORT DE RECHERCHE EUROPEENNE

Numero de la demande

EP     90 40 3202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3210157 (HÜLSBECK & FÜRST)<br>* page 12, ligne 5 - page 15, ligne 28; figures 1-10 * | 1, 2, 5, 9-11 | B65D51/00 |
| A | EP-A-0096604 (AUTOMOBILES CITROEN)<br>* figure 1 * | 1 | |
| A | FR-A-2436684 (ITW FASTEX ITALIA)<br>* page 2, ligne 35 - page 5, ligne 32; figures 1-4, 6-8 * | 1, 2, 10, 11 | |

|  |  |  | DOMAINES TECHNIQUES RECHERCHES (Int. Cl.5) |
|---|---|---|---|
|  |  |  | B65D<br>B60K |

Le présent rapport a été établi pour toutes les revendications

| Lieu de la recherche | Date d'achèvement de la recherche | Examinateur |
|---|---|---|
| BERLIN | 07 FEVRIER 1991 | SPETTEL, J.D.M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)

9